# EUROPEAN PATENT SPECIFICATION

(11) **EP 1 097 316 B1**
(45) Date of publication and mention of the grant of the patent: **02.10.2002**
(21) Application number: 99928971.3
(22) Date of filing: 13.07.1999
(51) Int. Cl.: F16H 25/22, B66F 3/08

(54) **TAPERED ROLLER SCREW APPARATUS AND ITS DRIVEN DEVICE**
ROLLENSCHNECKE MIT KONISCHEN ROLLEN UND DAMIT ANGETRIEBENE VORRICHTUNG
APPAREIL AVEC VIS A ROULEAUX CONIQUES ET PROCEDE DE COMMANDE

(30) Priority: 14.07.1998 US 114923
(43) Date of publication of application: 09.05.2001
(73) Proprietor: Les Produits Fraco Limitée, Saint-Mathias sur Richelieu, Québec J3L 6A1 (CA)
(72) Inventor: ST-GERMAIN, André, St-Bonaventure, Québec J0C 1C0 (CA); TESSIER, Luc, St-Nicéphore, Québec J2A 2K2 (CA)
(74) Representative: Bonnetat, Christian
(86) International application number: CA9900635
(87) International publication number: WO00004303

(56) References cited:
- US-A- 4 274 296
- US-A- 4 541 297

## Description

### FIELD OF THE INVENTION

The present invention relates to driving apparatus, and more particularly to the driving apparatus using an endless screw having tapered rollers spacedly arranged along a helical line and rotatably engaging related projection surfaces mounted on the driven device.

### BACKGROUND OF THE INVENTION

In driving mechanisms, it is well known to use a gear and rack type of assembly, especially when the driven part of the assembly is substantially heavy such as a work platform of scaffolding or an elevator cage. In some situations the load is so high, 1000 pounds (450 kilograms) and more, that a lot of drag torque will be caused by the friction between the gear and the different teeth of the rack. This drag torque might even be increased by dust depositions on the rack teeth.

To enhance the efficiency of the driving mechanism by smoothing the interface between the gear and the rack teeth is already known as shown in U.S. Patents No. 4,541,297 granted on September 17, 1985 to Fujita and No. 5,636,705 granted on June 10, 1997 to St-Germain.

St-Germain shows a driving mechanism where the endless screw 80 engages with a plurality of equally spaced studs 50 forming the rack portion of the assembly, each stud 50 having a roller bearing mounted at its extremity.

Fujita shows an opposite driving mechanism where the endless screw is made with a cylindrical shaft proper 1 having a plurality of rollers 7 spaced along a helical line H mounted thereon. The rollers 7 engaging spaced projection 12 surfaces 13 representing the rack portion of the assembly.

Both of these mechanisms have a similar problem. Since the rollers have a certain thickness, they obviously have a large portion of their thickness that slides onto their respective engaging surface during the movement because of the varying radius from the axis of the endless gear, or shaft proper, of each engaging region between the roller and its engaging surface (or line). The sliding tends to deteriorate the surface of the weaker engaging material, thus considerably limiting the life of the driving mechanism. Also, the bearings being generally expensive, one would like to limit the replacement frequency of these, if they have the weaker engaging material. On the other hand, the replacement of either the endless screw or the rail projections of the driven structure is also an expensive situation.

### OBJECTS OF THE INVENTION

It is an object of the present invention to provide a driving apparatus for linearly moving a structure that will obviate the above-noted disadvantages.

It is another object of this invention to provide a driving apparatus having at least two rollers simultaneously engaging projection surfaces.

It is also another object of this invention to provide a driving apparatus having the capability to drive its driven device into both directions of a linear movement.

It is a further object of this invention to provide a driving apparatus being driven by a hydraulic system that includes two hydraulic motors for increased load capabilities.

It is yet an object of this invention to provide a lifting driving apparatus being driven by a hydraulic system which includes a manual backup valve allowing for a safe and smooth descending movement upon failure of the hydraulic system.

It is yet another object of this invention to provide a structure including at least two lifting driving apparatus each being driven by an independent hydraulic system.

### SUMMARY OF THE INVENTION

The driving apparatus according the prior art disclosed in U.S. Patent No. 4,541,297 comprises:
a) a roller screw member including a main shaft, with a plurality of roller shafts projecting radially outwardly from the main shaft, and arranged at equally spaced intervals along a helical line around the main shaft, and a plurality of rollers rotatably mounted on the roller shafts; and
b) a rail member adjacent and axially oriented with the main shaft of the roller screw member, including a plurality of equally spaced projections having inclined upper surfaces adapted for engagement with the bottom of the rollers, and the inclination of the projection upper surfaces being equal to that of the helical line of the roller shafts of the roller screw member; and
c) one of the roller screw and rail members being adapted for axial movement and the other of the roller screw and rail members being fixed against axial movement, and the rotation of the main shaft providing the movable member to move in the axial direction of the main shaft with the roller bottom surfaces rotatably engaging the projection upper surfaces,
   whereas the driving apparatus of the present invention as in claim 1 further comprises the following technical features:
d) the rollers are tapered to an angle and are oriented onto the roller shafts with the tapering inwardly to the main shaft.
e) the tapered roller bottom surfaces rotatably engage the projection upper surfaces, and the angle of the tapering being determined to provide a sliding free engagement between the roller surfaces and the projection upper surfaces during movement.

Preferably, the roller shafts projecting radially outwardly and upwardly at the angle from the radial direction from the main shaft thereby providing each roller with the bottom of its tapered surface being generally perpendicularly oriented with the axis of the main shaft.

Alternatively, the projections of the rail member further having inclined lower surfaces adapted for radial engagement with the top of the tapered surfaces of the rollers, the inclination of the projection lower surfaces being equal to that of the helical line of the roller shafts of the roller screw member, the opposite rotation of the main shaft providing the movable member to move in the opposite axial direction of the main shaft with the tapered roller top surfaces rotatably engaging the projection lower surfaces, the angle of the tapering also providing a sliding free engagement between the roller surfaces and the projection lower surfaces during opposite movement, the spacing between a projection upper surface and the facing lower surface of the adjacent projection being adapted to essentially freely receive the rollers thereby providing a smooth transition between the movements of the movable member along the axial direction and the opposite axial direction of the main shaft.

Preferably, the bearing means comprises roller bearings.

Preferably, the roller tapered surfaces are made of a material selected from the group consisting of metal, rubber and thermoplastics.

Preferably, the roller screw member is adapted for axial movement and the rail member is fixed against axial movement.

Alternatively, a second rail member adjacent the opposite side and axially oriented with the main shaft of the roller screw member.

Preferably, at least two rollers are being simultaneously rotatably engaging the projection upper surfaces at all time.

Preferably, the driving apparatus further comprises a structure member fixedly attach to the roller screw member, the structure member including a means for rotating the main shaft.

Alternatively, the means for rotating the main shaft being an electrical motor, the structure member further including a power source means connected to and a means for controlling the electrical motor whereby a user controllably operates the movement of the driving apparatus.

Preferably, the means for rotating the main shaft being a hydraulic motor located at one end of the main shaft, the structure member further including a hydraulic system linked to and a means for controlling the hydraulic motor whereby a user controllably operates the movement of the driving apparatus.

Preferably, the hydraulic system comprises a means for pressurizing a hydraulic liquid located into a reservoir and a plurality of hose lines and used to drive the hydraulic motor, a plurality of valve means for controlling the direction of the flow of hydraulic liquid within the lines, a plurality of relieve valve means for controlling the flow of hydraulic liquid, a flow limiting means to safely limit the maximum flow of the hydraulic liquid, the means for controlling the hydraulic motor being linked to the valve means and to the relieve valve means, the means for pressurizing being removably carried by the structure member.

Preferably, the driving apparatus is used to drive the roller screw member against at least one constant pulling force, the hydraulic system further comprises a manual backup valve bypassing the relieve valve means and operable by the user for safely and slowly allowing for the hydraulic liquid to circulate within the hydraulic motor thereby the movable member of the driving apparatus being pulled back by the constant pulling force.

Preferably, the hydraulic motor being a first hydraulic motor, the means for rotating further includes a second hydraulic motor located at the other end of the main shaft, the second hydraulic motor being linked in parallel with the first one within the hydraulic system to reduce the flow of the hydraulic liquid circulating into the motors thereby slowing down the axial movement and increasing the loading capacity of the driving apparatus.

Preferably, the means for pressurizing being an internal combustion engine driving a hydraulic pump and the constant pulling force being the gravitational force.

Preferably, the roller screw member further having a security brake member for mechanically preventing any relatively drastic axial movement of the movable member along the non-movable member, the brake member comprising an automatically locking mechanism which engages the non-movable member at regular intervals therealong and a latching mechanism allowing for the user to bias the locking mechanism whenever required.

Alternatively, the present invention provides, in combination, a platform member, a post member, and a driving apparatus movingly mounting the platform member along the post member, the driving apparatus being as above described. The rail member is removably attached to the post member and, the structure member, fixedly attach to the roller screw member and supporting the platform member, is at least partially surrounding the post member and includes a means for rotating the main shaft. The roller screw member being adapted for axial movement and the rail member being fixed against axial movement.

Alternatively, in the above combination, the projections of the rail member further having inclined lower surfaces adapted for radial engagement with the top of the tapered surfaces of the rollers, the inclination of the projection lower surfaces being equal to that of the helical line of the roller shafts of the roller screw member, the opposite rotation of the main shaft providing the movable member to move in the opposite axial direction of the main shaft with the tapered roller top surfaces rotatably engaging the projection lower surfaces, the angle of the tapering also providing a sliding free engagement between the roller surfaces and the projection lower surfaces during opposite movement, the spacing between a projection upper surface and the facing lower surface of the adjacent projection being adapted to essentially freely receive the rollers thereby providing a smooth transition between the movements of the movable member along the axial direction and the opposite axial direction of the main shaft.

Preferably, the above combination further includes a hydraulic system as above described.

Preferably, the structure member being relatively long to significantly enhance the structural rigidity of the post member especially against buckling, the structure member having a plurality of pair of free wheels rotatably mounted thereon, the free wheels bearing on the post member and guiding the structure member therealong.

Preferably, the platform member is a work platform.

Alternatively, the platform member is an elevator cage.

Preferably, the structure member further having a security brake member for mechanically preventing any relatively drastic axial movement of the movable member along the non-movable member, the brake member comprising an automatically locking mechanism which engages the post member at regular intervals therealong and a latching mechanism allowing for the user to bias the locking mechanism whenever required.

Alternatively, in a modified combination, the post member and the driving apparatus being a first post member and a first driving apparatus respectively, the combination further including at least a second post member spaced from the first post member, a second driving apparatus movingly mounting the platform member along the second post member, each structure member supporting one end of the platform member located inbetween the two post members.

Alternatively, the modified combination comprises at least two platform members, at least three post members and at least three driving apparatus, each of the platform members sharing a same post member positioned between the two of them.

### BRIEF DESCRIPTION OF THE DRAWINGS

In the annexed drawings, like reference characters indicate like elements throughout.
Figure 1 is a front elevation view of the preferred embodiment of the driving apparatus of the present invention and its driven device, the post member being broken at both extremities;
Figure 2 is an enlarged top view taken along line 2-2 of Fig. 1;
Figure 3 is a partially broken enlarged front view of the driving apparatus;
Figure 4 is a partially broken enlarged side view taken along line 4-4 of Fig. 3;
Figure 4a is a view similar to that of Fig. 3 showing a second embodiment of the driving apparatus being able to drive into the two opposed linear directions;
Figure 5 is an isometric view of a tapered roller mounted on its roller shaft;
Figure 6 is a rotated sectional view taken along line 6-6 of Fig. 5;
Figures 7 and 8 are side views of the security brake member taken along line 7-7 of Fig. 2 showing the security brake member in its locking operative position and unlatched non-operative position respectively; and
Figure 9 is a schematic diagram representation of the hydraulic system of the driving apparatus.

### DETAILED DESCRIPTION OF THE PREFERRED EMBODIMENT

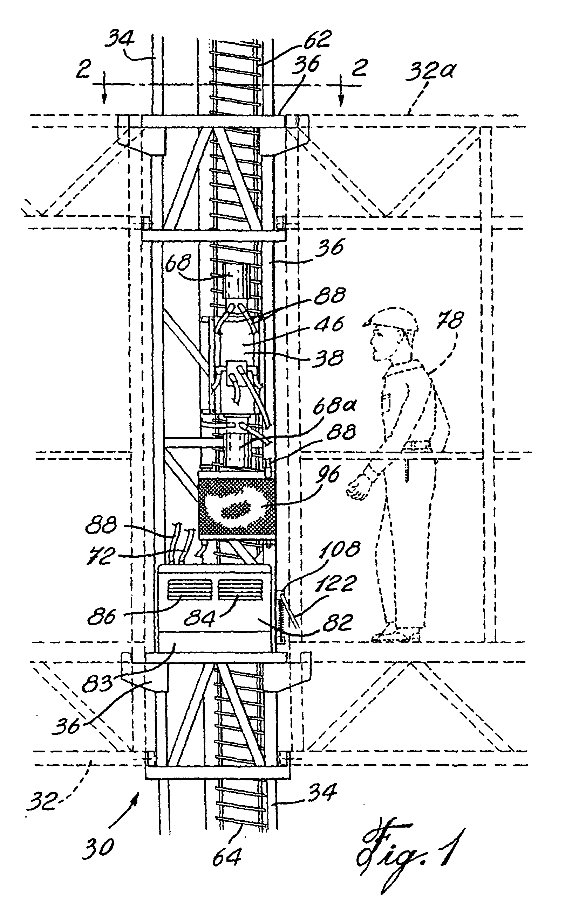

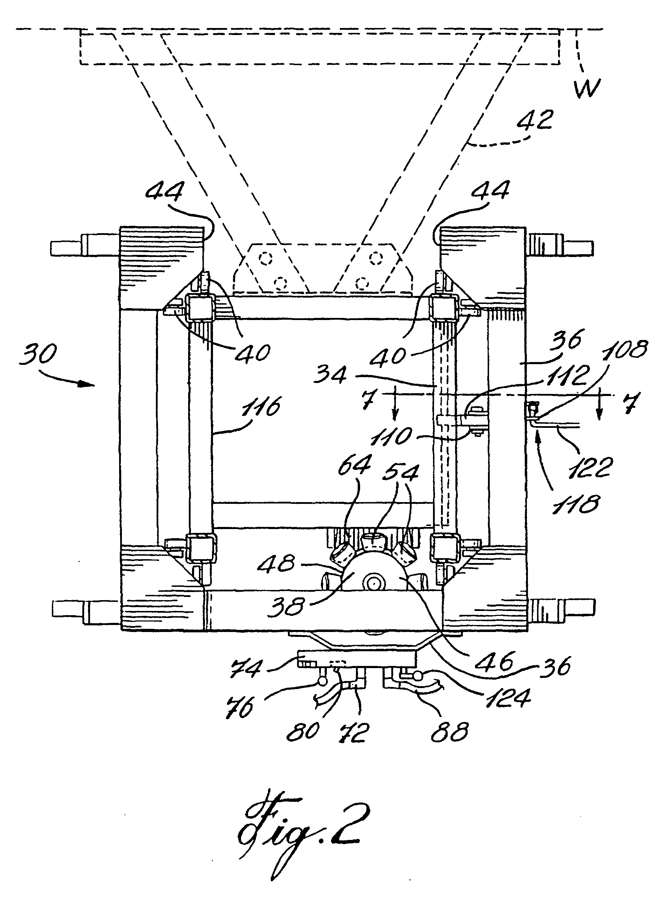

Referring to Figs. 1 to 8 there is shown a scaffolding structure 30 used to raise a work platform 32 along a post 34. From Fig. 1, the work platform 32 is supported by a structure member, preferably a sleeve 36, at least partially surrounding the post 34. Preferably, the sleeve 36 is moved along the post 34 using a driving apparatus 38 and, both the sleeve 36 and the post 34 have a generally square cross section, as seen in Fig. 2. A plurality of pairs of free wheels 40 rotatably mounted on the sleeve 36 bear on the post 34 and guide the sleeve 36 along the post 34 during the movement, as already illustrated in U.S. Patent No 5,636,705 to St-Germain. Depending on the overall length of the post 34, the latter may be secured to an adjacent building wall W via a plurality of anchor members 42 spacedly located along the post 34. The sleeve 36 has a longitudinal slit 44 opened at both ends for clearing the anchor members 42 during its vertical movement along the post 34. The sleeve 36 is also preferably long to significantly enhance the structural rigidity of the post 34, especially against buckling and, allowing for support of a second work platform 32a if required. The post 34 is adapted to be removably mounted at its base onto a support structure (not shown) adapted to rigidly support the weight of the whole scaffolding structure 30.

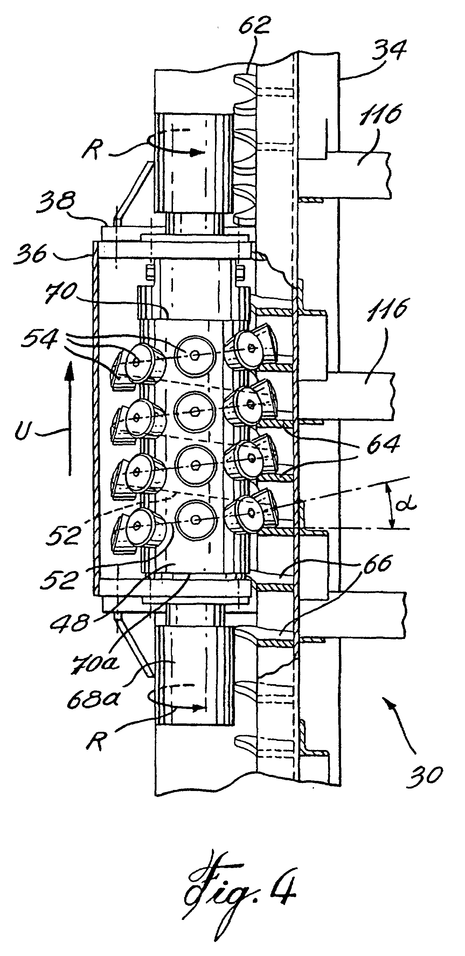

As shown in Fig. 4, the driving apparatus 38 comprises a roller screw member 46 that is preferably mounted onto the sleeve 36. The driving apparatus 38 includes a main shaft 48, a plurality of roller shafts 50 projecting radially outwardly and preferably upwardly at an angle α from the radial direction from the main shaft 48. The roller shafts 50 are preferably arranged at equally spaced intervals along a helical line 52 around the main shaft 48. A roller 54 is rotatably mounted, preferably using a roller bearing 56, at the projected extremity of each roller shafts 50. The rollers 54 are tapered, preferably to the angle α, and are oriented onto the roller shafts 50 with the tapering inwardly to the main shaft 48 in order to have the bottom 58 of their tapered surfaces 60 being generally perpendicularly oriented with the axis of the main shaft 48.

The driving apparatus 38 also includes a rail member 62 adjacent and axially oriented with the main shaft 48. The rail member 62, preferably removably mounted onto the post 34, includes a plurality of equally spaced projections 64 having inclined upper surfaces 66 adapted for radial engagement with the bottom 58 of the tapered surfaces 60 of the rollers 54. The inclination of the projection upper surfaces 66 being equal to that of the helical line 52 of the roller shafts 54 on the main shaft 48. Preferably, both the roller tapered surfaces 60 and the projection upper surfaces 66 are made out of a relatively hard metal such as high strength steel. Depending on the loading of the driving apparatus 38, the material may also be rubber or a thermoplastic.

The rotation R of the main shaft 48 with the rollers 54 induces its vertical displacement in the axial direction U of the main shaft 48 with the tapered roller bottom surfaces 58 rotatably engaging the projection upper surfaces 66. The angle α of the tapering is determined to provide a sliding free engagement between the roller surfaces 60 and the projection upper surfaces 66 during movement, and is essentially dependent on the radial distance between the rollers 54 and the axis of the main shaft 48. Both the angle α between the roller shafts 50 and the main shaft 48 and of the roller tapering provide each roller 54 with the bottom 58 of its tapered surface 60 being perpendicularly oriented with the axis of the main shaft 48.

During the movement of the roller screw member 46 onto the rail member 62, it is preferable to have at least eight (8) rollers 54 simultaneously engaging the projections 64 at all time.

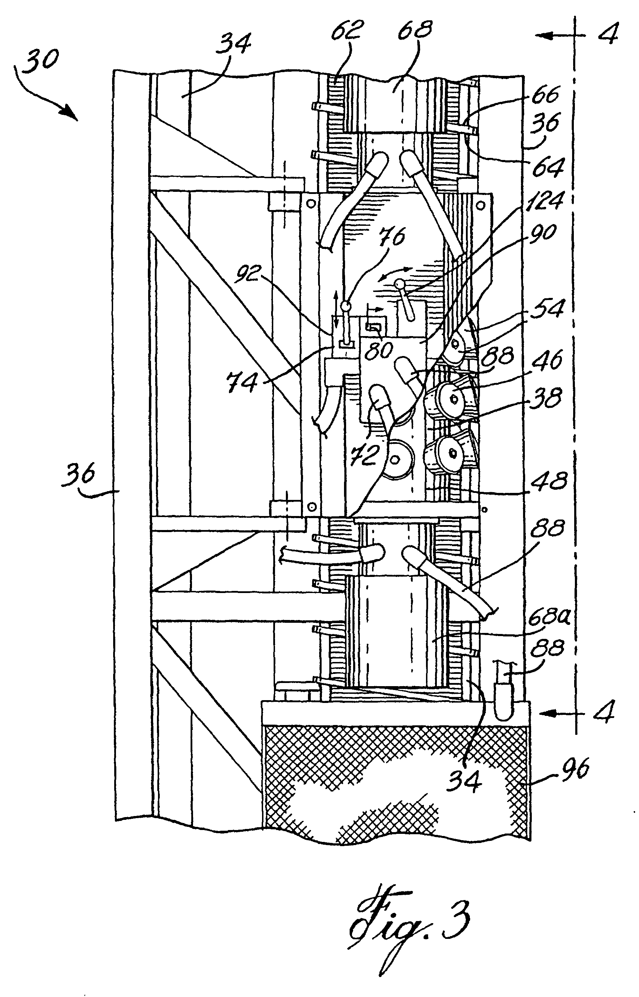

In Fig. 3, there is shown a means for rotating the main shaft 48, preferably a hydraulic motor 68 located at the top end 70 of the main shaft 48, fixedly attached to the sleeve 36. Also, the structure member includes a hydraulic system 72 linked to the hydraulic motor 68 and a means for controlling 74 the hydraulic motor 68. The means for controlling 74 preferably being a manual lever 76 operated by a user 78 and allowing for variable speed of the hydraulic motor 68. To increase the loading capacity of the driving apparatus 38, a second hydraulic motor 68a preferably located at the bottom end 70a of the main shaft 48. The second motor 68a is linked in parallel with the first motor 68 within the hydraulic system 72, and is activated by a two position switch 80 controlled by the user 78.

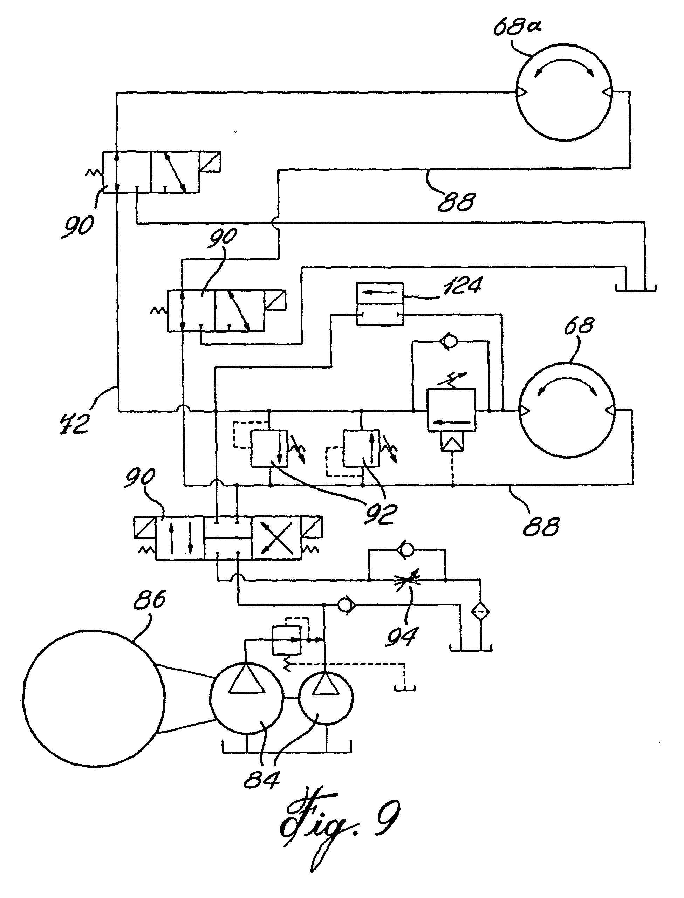

The hydraulic system, partially shown in Fig. 3, comprises a means for pressurizing 82 the hydraulic liquid located into a reservoir 83, preferably including a hydraulic dual stage pump 84 and an internal combustion engine 86 driving the hydraulic pump 84, a plurality of hose lines 88 to circulate the hydraulic liquid from the reservoir 83 to the hydraulic motors 68, 68a in a closed loop and connecting a plurality of valve means, preferably electrical valves 90, to control the circulation of the hydraulic liquid within the lines 88, a plurality of relieve valve means 92 for controlling the flow of the hydraulic liquid thereby varying the speed of the hydraulic motor 68, and a flow limiting means 94 to safely limit the maximum flow of hydraulic liquid. Since the hydraulic liquid does heat up very quickly under prolonged utilization, a radiator 96 is provided within the hydraulic system 72 to cool down the hydraulic liquid. The hydraulic system 72 is schematically represented in Fig. 9.

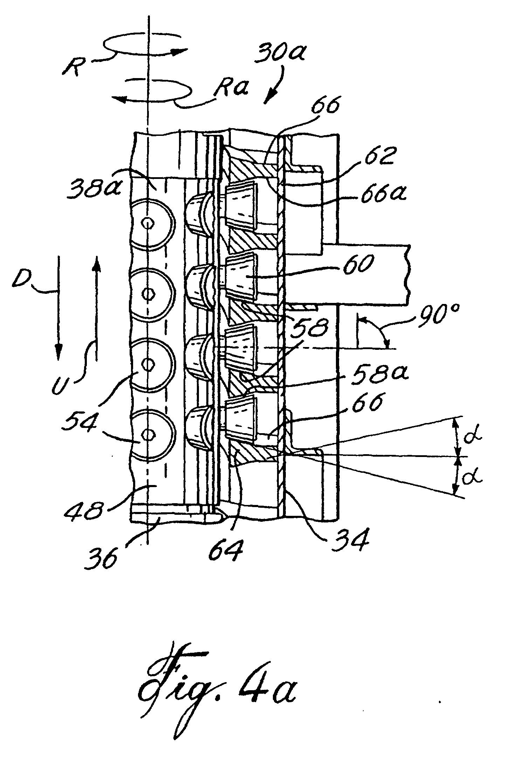

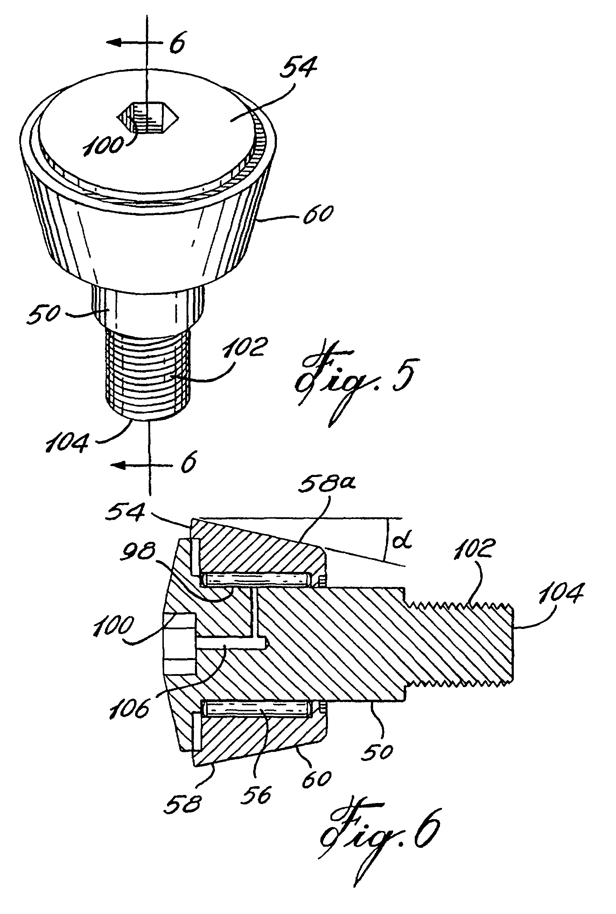

In Fig. 5, there is shown a roller 54 mounted on its roller shaft 50. At the roller side extremity 98 of the roller shaft 50, there is a centered and preferably hexagonal cavity 100 used to screw down the roller shaft 50 into the main shaft 48 with the threads 102 located at the other extremity 104 of the roller shaft 50. Also, as seen in Fig. 6, there is a small angular channel 106 connecting the roller bearing 56 to the hexagonal cavity 100. The small channel 106 is used during periodical maintenance of the bearing 56 for lubrication. The tapering at the angle α of the roller 54 is well illustrated in this figure.

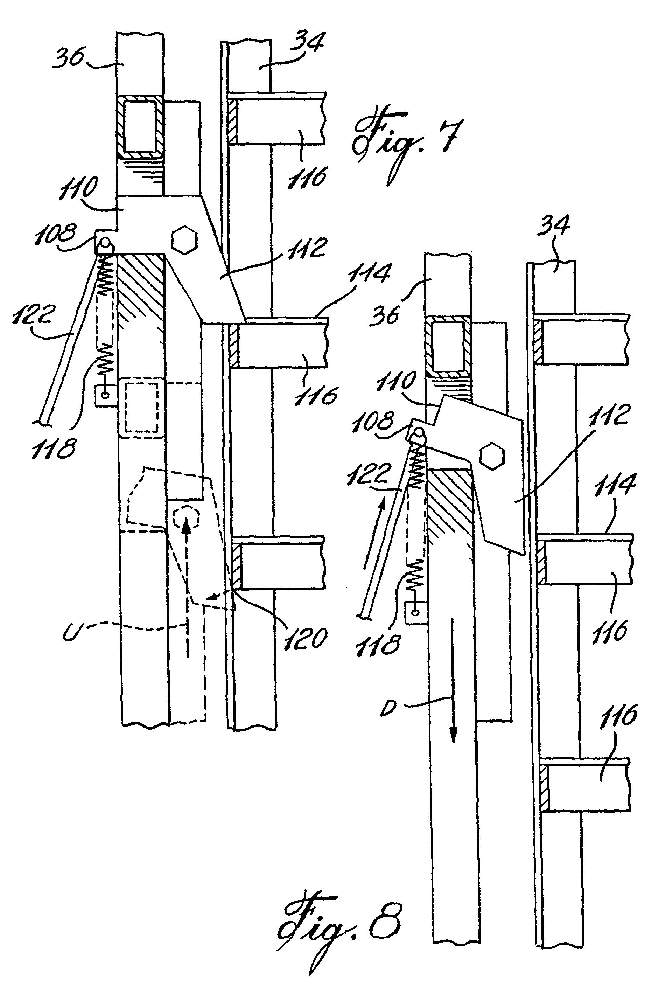

Since the driving apparatus 38 drives the sleeve 36 supporting the work platform 32 upward against the constant pulling force of gravity, the sleeve 36 also includes a security brake member 108 for mechanically preventing drastic downward axial movement of the sleeve 36 and the work platform 32 in case of failure of the hydraulic system 72. The security brake member 108, as shown in Fig. 7, preferably includes a locking mechanism 110 comprising a hook 112 pivotally mounted on the sleeve 36 which abuttingly engages a series of relatively regularly spaced stops, preferably the top surfaces 114 of cross beams 116, located along the post 34, with a latching mechanism 118 in a latched position. During normal upward movement U of the sleeve 36 along the post 34, the hook 112 is automatically moved into the unlatched position while crossing the next cross beam 116 and abutting its bottom surface 120, as shown in broken lines in Fig. 7. During the downward movement D of the sleeve, the user can activate the latching mechanism 118 to bias the locking mechanism 110 by keeping the hook 112 into an unlatched position via a lever 122, as shown in Fig. 8.

The hydraulic system 72 also includes a manual backup valve 124 for the hydraulic liquid to bypass the different relieve valves means 92 and circulate through the hydraulic motors 68, 68a, and allowing for a safe and slow downward movement D of the sleeve 36 and the platform 32 under the gravity force in case of a problem with the hydraulic system 72. The user 78 via a backup lever 126 preferably operates this manual backup valve 124.

In a second embodiment of this invention of the driving apparatus 38a of a scaffolding 30a, as shown in Fig. 4a, the roller shafts 50 are projected radially outwardly from the main shaft 48 and their axes are perpendicular to the axis of the main shaft 48. Also, the projections 64 have inclined lower surfaces 66a adapted for radial engagement with the top 58a of the tapered surfaces 60 of the rollers 54. The inclination of the projection lower surfaces 66a in the tangential direction of the main shaft 48 being also equal to that of the helical line 52 of the roller shafts 54 on the main shaft 48. The opposite rotation Ra of the main shaft 48 with the rollers 54 induces its vertical displacement in the opposite axial direction D of the main shaft 48 with the tapered roller top surfaces 58a rotatably engaging the projection lower surfaces 66a. The angle α of the tapering also provides a sliding free engagement between the roller surfaces 60 and the projection lower surfaces 66a during opposite movement, and is again essentially dependent on the radial distance between the rollers 54 and the axis of the main shaft 48. This orientation of the axes of the roller shafts 50 with the projection upper 66 and lower 66a surfaces being both adapted at an angle α to engage the tapered surfaces 60 of the rollers 54. The spacing between a projection upper surface 66 and the facing lower surface 66a of the adjacent projection is adapted to essentially freely receive the rollers 54 and provides a smooth transition between the two direction movements of the sleeve 36 and the work platform 32 along the axial direction U and the opposite axial direction D of the main shaft 48. This embodiment is particularly adapted for situations where both the axis of the main shaft 48 and the rail member 62 are substantially horizontally oriented.

In a further embodiment of a scaffolding, the scaffolding comprises a work platform 32 with at least two ends, each end of the work platform 32 is supported by its related sleeve 36 combined with its related driving apparatus 38 and post 34. The work platform 32 being located inbetween the two posts 34. In the same manner, other embodiments can be obtained such as scaffoldings comprising at least two work platforms 32, at least three posts 34 and at least three driving apparatus 38 with their respective sleeves 36, each of the work platforms 32 sharing a same post 34 positioned between the two of them.

Also, the present invention is not limited to scaffoldings, it can also be used for different types of elevators or in any situation where a platform member needs to be driven along a linear direction.

## Claims

1. A driving apparatus (38) comprising:
a) a roller screw member (46) including a main shaft (48), a plurality of roller shafts (50) projecting radially outwardly from the main shaft (48) and arranged at equally spaced intervals along a helical line (52) around the main shaft (48) and, a plurality of rollers (54) rotatably mounted on the roller shafts (50), the rollers (54) including a bearing means (56) for mounting the rollers (54) on the roller shafts (50), the rollers (54) being tapered to an angle (α), the rollers (54) being oriented onto the roller shafts (50) with the tapering inwardly to the main shaft (48); and
b) a rail member (62) adjacent and axially oriented with the main shaft (48) of the roller screw member (46), the rail member (62) including a plurality of equally spaced projections (64) having inclined upper surfaces (66) adapted for radial engagement with the bottom (58) of the tapered surfaces (60) of the rollers (54), the inclination of the projection upper surfaces (66) being equal to that of the helical line (52) of the roller shafts (54) of the roller screw member (46);
c) one of the roller screw (46) and rail (62) members being adapted for axial movement and the other of the roller screw (46) and rail (62) members being fixed against axial movement, the rotation of the main shaft (48) providing the movable member to move in the axial direction of the main shaft (48) with the tapered roller bottom surfaces (58) rotatably engaging the projection upper surfaces (66), the angle (α) of the tapering being determined to provide a sliding free engagement between the roller surfaces (60) and the projection upper surfaces (66) during movement.

2. A driving apparatus (38) as defined in claim 1 wherein the roller shafts (50) projecting radially outwardly and upwardly at the angle (α) from the radial direction from the main shaft (48) thereby providing each roller (54) with the bottom (58) of its tapered surface (60) being generally perpendicularly oriented with the axis of the main shaft (48).

3. A driving apparatus (38) as defined in claim 1 wherein the projections (64) of the rail member (62) further having inclined lower surfaces (66a) adapted for radial engagement with the top (58a) of the tapered surfaces (60) of the rollers (54), the inclination of the projection lower surfaces (66a) being equal to that of the helical line (52) of the roller shafts (50) of the roller screw member (46), the opposite rotation of the main shaft (48) providing the movable member to move in the opposite axial direction of the main shaft with the tapered roller top surfaces (58a) rotatably engaging the projection lower surfaces (66a), the angle (α) of the tapering also providing a sliding free engagement between the roller surfaces (60) and the projection lower surfaces (66a) during opposite movement, the spacing between a projection upper surface (66) and the facing lower surface (66a) of the adjacent projection (64) being adapted to essentially freely receive the rollers (54) thereby providing a smooth transition between the movements of the movable member along the axial direction and the opposite axial direction of the main shaft (48).

4. A driving apparatus (38) as defined in claim 1 wherein the bearing means (56) comprises roller bearings.

5. A driving apparatus (38) as defined in claim 1 wherein the roller tapered surfaces (60) are made of a material selected from the group consisting of metal, rubber and thermoplastics.

6. A driving apparatus (38) as defined in claim 1 wherein the roller screw member (46) is adapted for axial movement and the rail member (62) is fixed against axial movement.

7. A driving apparatus (38) as defined in claim 1 wherein the rail member (62) is adapted for axial movement and the roller screw member (46) is fixed against axial movement.

8. A driving apparatus (38) as defined in claim 1 wherein a second rail member adjacent the opposite side and axially oriented with the main shaft (48) of the roller screw member (46).

9. A driving apparatus (38) as defined in claim 1 wherein at least two rollers (54) are being simultaneously rotatably engaging the projection upper surfaces (66) at all time.

10. A driving apparatus (38) as defined in claim 1 further comprising a structure member (36) fixedly attach to the roller screw member (46), the structure member (36) including a means for rotating the main shaft (48).

11. A driving apparatus (38) as defined in claim 10 wherein the means for rotating the main shaft (48) being an electrical motor, the structure member (36) further including a power source means connected to and a means for controlling the electrical motor whereby a user (78) controllably operates the movement of the driving apparatus (38).

12. A driving apparatus (38) as defined in claim 10 wherein the means for rotating the main shaft (48) being a hydraulic motor (68) located at one end (70) of the main shaft (48), the structure member further including a hydraulic system (72) linked to and a means for controlling (74) the hydraulic motor (68) whereby a user (78) controllably operates the movement of the driving apparatus (38).

13. A driving apparatus (38) as defined in claim 12 wherein the hydraulic system (72) comprises a means for pressurizing (82) a hydraulic liquid located into a reservoir (83) and a plurality of hose lines (88) and used to drive the hydraulic motor (68), a plurality of valve means (90) for controlling the direction of the flow of hydraulic liquid within the lines (88), a plurality of relieve valve means (92) for controlling the flow of hydraulic liquid, a flow limiting means (94) to safely limit the maximum flow of the hydraulic liquid, the means for controlling (74) the hydraulic motor (68) being linked to the valve means (90) and to the relieve valve means (92), the means for pressurizing (82) being removably carried by the structure member (36).

14. A driving apparatus (38) as defined in claim 13 wherein the driving apparatus (38) is used to drive the movable member against at least one constant pulling force, the hydraulic system (72) further comprises a manual backup valve (124) bypassing the relieve valve means (92) and operable by the user (78) for safely and slowly allowing for the hydraulic liquid to circulate within the hydraulic motor (68) thereby the movable member of the driving apparatus (38) being pulled back by the constant pulling force.

15. A driving apparatus (38) as defined in claim 14 wherein the hydraulic motor (68) being a first hydraulic motor, the means for rotating further includes a second hydraulic motor (68a) located at the other end (70a) of the main shaft (48), the second hydraulic motor (68a) being linked in parallel with the first one (68) within the hydraulic system (72) to reduce the flow of the hydraulic liquid circulating into the motors (68, 68a) thereby slowing down the axial movement and increasing the loading capacity of the driving apparatus (38).

16. A driving apparatus (38) as defined in claim 14 wherein the means for pressurizing (82) being an internal combustion engine (86) driving a hydraulic pump (84) and the constant pulling force being the gravitational force.

17. A driving apparatus (38) as defined in claim 16 wherein the movable member further having a security brake member (108) for mechanically preventing any relatively drastic axial movement of the movable member along the non-movable member, the brake member (108) comprising an automatically locking mechanism (110) which engages the non-movable member at regular intervals therealong and a latching mechanism (118) allowing for the user (78) to bias the locking mechanism (110) whenever required.

18. A combination, of a platform member (36), a post member (34), and a driving apparatus (38) movingly mounting the platform member (36) along the post member (34), the driving apparatus (38) comprising:
a) a roller screw member (46) including a main shaft (48), a plurality of roller shafts (50) projecting radially outwardly from the main shaft (48) and arranged at equally spaced intervals along a helical line (52) around the main shaft (48) and, a plurality of rollers (54) rotatably mounted on the roller shafts (50), the rollers (54) including a bearing means (56) for mounting the rollers (54) on the roller shafts (50), the rollers (54) being tapered to an angle (α), the rollers (54) being oriented onto the roller shafts (50) with the tapering inwardly to the main shaft (48);
b) a rail member (62) adjacent and axially oriented with the main shaft (48) of the roller screw member (46), the rail member (62) including a plurality of equally spaced projections (64) having inclined upper surfaces (66) adapted for radial engagement with the bottom (58) of the tapered surfaces (60) of the rollers (54), the inclination of the projection upper surfaces (66) being equal to that of the helical line (52) of the roller shafts (54) of the roller screw member (46), the rail member (62) being removably attached to the post member (34); and
c) a structure member (36) fixedly attach to the roller screw member (46) and supporting the platform member (32), the structure member (36) at least partially surrounding the post member (34) and including a means for rotating the main shaft (48);
d) one of the roller screw (46) and rail (62) members being adapted for axial movement and the other of the roller screw (46) and rail (62) members being fixed against axial movement, the rotation of the main shaft (48) providing the roller screw member (46) with the platform member (32) to move in the axial direction of the main shaft (48) along the post member (34) with the tapered roller bottom surfaces (58) rotatably engaging the projection upper surfaces (66), the angle (α) of the tapering being determined to provide a sliding free engagement between the roller surfaces (60) and the projection upper surfaces (66) during movement.

19. Combination as defined in claim 18 wherein the roller shafts (50) projecting radially outwardly and upwardly at the angle (α) from the radial direction from the main shaft (48) thereby providing each roller (54) with the bottom (58) of its tapered surface (60) being generally perpendicularly oriented with the axis of the main shaft (48).

20. Combination as defined in claim 18 wherein the projections (64) of the rail member (62) further having inclined lower surfaces (66a) adapted for radial engagement with the top (58a) of the tapered surfaces (60) of the rollers (54), the inclination of the projection lower surfaces (66a) being equal to that of the helical line (52) of the roller shafts (50) of the roller screw member (46), the opposite rotation of the main shaft (48) providing the movable member to move in the opposite axial direction of the main shaft (48) with the tapered roller top surfaces (58a) rotatably engaging the projection lower surfaces (66a), the angle (α) of the tapering also providing a sliding free engagement between the roller surfaces (60) and the projection lower surfaces (66a) during opposite movement, the spacing between a projection upper surface (66) and the facing lower surface (66a) of the adjacent projection (64) being adapted to essentially freely receive the rollers (54) thereby providing a smooth transition between the movements of the movable member along the axial direction and the opposite axial direction of the main shaft (48).

21. Combination as defined in claim 18 wherein the roller screw member (46) being adapted for axial movement and the rail member (62) on the post member (34) is fixed against axial movement.

22. Combination as defined in claim 18 wherein the structure member (36) being relatively long to significantly enhance the structural rigidity of the post member (34) especially against buckling, the structure member (36) having a plurality of pair of free wheels (40) rotatably mounted thereon, the free wheels (40) bearing on the post member (34) and guiding the structure member (32) therealong.

23. Combination as defined in claim 18 wherein the means for rotating the main shaft (48) being a hydraulic motor (68) located at one end (70) of the main shaft (48), the structure member (36) further including a hydraulic system (72) linked to and a means for controlling (74) the hydraulic motor (68) whereby a user (78) controllably operates the movement of the driving apparatus (38).

24. Combination as defined in claim 23 wherein the hydraulic system (72) comprises a means for pressurizing (82) a hydraulic liquid located into a reservoir (83) and a plurality of hose lines (88) and used to drive the hydraulic motor (68), a plurality of valve means (90) for controlling the direction of the flow of hydraulic liquid within the lines (88), a plurality of relieve valve means (92) for controlling the flow of hydraulic liquid, a flow limiting means (94) to safely limit the maximum flow of the hydraulic liquid, the means for controlling (74) the hydraulic motor (68) being linked to the valve means (90) and to the relieve valve means (92), the means for pressurizing (82) being removably carried by the structure member (36).

25. Combination as defined in claim 24 wherein the driving apparatus (38) is used to drive the movable member against at least one constant pulling force, the hydraulic system (72) further comprises a manual backup valve (124) bypassing the relieve valve means (92) and operable by the user (78) for safely and slowly allowing for the hydraulic liquid to circulate within the hydraulic motor (68) thereby the movable member of the driving apparatus (38) being pulled back by the constant pulling force.

26. Combination as defined in claim 25 wherein the hydraulic motor (68) being a first hydraulic motor, the means for rotating further includes a second hydraulic motor (68a) located at the other end (70a) of the main shaft (48), the second hydraulic motor (68a) being linked in parallel with the first one (68) within the hydraulic system (72) to reduce the flow of the hydraulic liquid circulating into the motors (68, 68a) thereby slowing down the axial movement and increasing the loading capacity of the driving apparatus (38).

27. Combination as defined in claim 26 wherein the platform member (32) being a work platform, the post member (34) and the structure member (36) having a generally square cross section, the means for pressurizing (82) being an internal combustion engine (86) driving a hydraulic pump (84) and, the constant pulling force being the gravitational force.

28. Combination as defined in claim 26 wherein the platform member (32) being an elevator cage and the constant pulling force being the gravitational force.

29. Combination as defined in claim 23 wherein the structure member (36) having a plurality of pair of free wheels (40) rotatably mounted thereon, the free wheels (40) bearing on the post member (34) and guiding the structure member (36) therealong.

30. Combination as defined in claim 29 wherein the structure member (36) further having a security brake member (108) for mechanically preventing any relatively drastic axial movement of the movable member along the non-movable member, the brake member (108) comprising an automatically locking mechanism (110) which engages the post member (34) at regular intervals therealong and a latching mechanism (118) allowing for the user (78) to bias the locking mechanism (110) whenever required.

31. The combination of claim 23 wherein the post member (34) and the driving apparatus (38) being a first post member (34) and a first driving apparatus (38) respectively, the combination further including at least a second post member spaced from the first post member, a second driving apparatus movingly mounting the platform member (32) along the second post member, each structure member (36) supporting one end of the platform member (32) located inbetween the two post members.

32. The combination of claim 31 comprising at least two platform members (32), at least three post members (34) and at least three driving apparatus (38), each of the platform members (32) sharing a same post member (34) positioned between the two of them.

## Patentansprüche

1. Antriebsvorrichtung (38), die folgendes umfaßt:
a) ein Rollenschneckenglied (46) mit einer Hauptwelle (48), mehreren radial aus der Hauptwelle (48) ragenden und in gleichen Abständen entlang einer Schraubenlinie (52) um die Hauptwelle (48) herum angeordneten Rollenwellen (50) und mehreren drehbar auf den Rollenwellen (50) angebrachten Rollen (54), wobei die Rollen (54) ein Lagermittel (56) zur Befestigung der Rollen (54) auf den Rollenwellen (50) enthalten, wobei die Rollen (54) zu einem Winkel (α) konisch zulaufen und derart auf den Rollenwellen (50) ausgerichtet sind, daß die Konizität einwärts zur Hauptwelle (48) verläuft; und
b) ein Schienenglied (62) neben der und axial ausgerichtet auf die Hauptwelle (48) des Rollenschneckenglieds (46), wobei das Schienenglied (62) mehrere gleichmäßig beabstandete Vorsprünge (64) mit geneigten Oberseiten (66), die zum radialen Eingriff mit der Unterseite (58) der konisch zulaufenden Flächen (60) der Rollen (54) ausgeführt sind, aufweist, wobei die Neigung der Vorsprungoberseiten (66) gleich der der Schraubenlinie (52) der Rollenwellen (54) des Rollenschneckenglieds (46) ist;
c) wobei das Rollenschneckenglied (46) oder das Schienenglied (62) zur Axialbewegung ausgelegt und das jeweils andere Glied, das heißt das Schienenglied (62) oder das Rollenschneckenglied (46), gegen Axialbewegung festgelegt ist, wobei die Drehung der Hauptwelle (48) das bewegliche Glied in Axialrichtung der Hauptwelle (48) in Bewegung versetzt, wobei die konisch zulaufenden Rollenunterseiten (58) die Vorsprungoberseiten (66) drehbar in Eingriff nehmen und der Winkel (α ) der Konizität bestimmt wird, um bei Bewegung einen gleitfreien Eingriff zwischen den Rollenflächen (60) und den Vorsprungoberseiten (66) bereitzustellen.

2. Antriebsvorrichtung (38) nach Anspruch 1, bei der die Rollenwellen (50) im Winkel (α) von der Radialrichtung von der Hauptwelle (48) radial nach außen und oben ragen, wodurch die Unterseite (58) der konisch zulaufenden Fläche (60) jeder Rolle (54) allgemein senkrecht zur Achse der Hauptwelle (48) ausgerichtet wird.

3. Antriebsvorrichtung (38) nach Anspruch 1, bei der die Vorsprünge (64) des Schienenglieds (62) weiterhin geneigte Unterseiten (66a) aufweisen, die zum radialen Eingriff mit der Oberseite (58a) der konisch zulaufenden Flächen (60) der Rollen (54) ausgeführt sind, wobei die Neigung der Vorsprungunterseiten (66a) gleich der der Schraubenlinie (52) der Rollenwellen (50) des Rollenschneckenglieds (46) ist, wobei die entgegengesetzte Drehung der Hauptwelle (48) das bewegliche Glied in die entgegengesetzte Axialrichtung der Hauptwelle (48) in Bewegung versetzt, wobei die konisch zulaufenden Rollenoberseiten (58a) die Vorsprungunterseiten (66a) drehbar in Eingriff nehmen, wobei der Winkel ( α) der Konizität bei entgegengesetater Bewegung auch einen gleitfreien Eingriff zwischen den Rollenflächen (60) und den Vorsprungunterseiten (66a) bereitstellt, wobei der Abstand zwischen einer Vorsprungoberseite (66) und der gegenüberliegenden Unterseite (66a) des benachbarten Vorsprungs (64) zur im wesentlichen freien Aufnahme der Rollen (54) ausgeführt ist, wodurch ein fließender Übergang zwischen den Bewegungen des beweglichen Glieds entlang der Axialrichtung und der entgegengesetzten Axiatrichtung der Hauptwelle (48) gewährleistet wird.

4. Antriebsvorrichtung (38) nach Anspruch 1, bei der das Lagermittel (56) Rollenlager umfaßt.

5. Antriebsvorrichtung (38) nach Anspruch 1, bei der die konisch zulaufenden Rollenflächen (60) aus einem Material hergestellt sind, das aus der Metall, Kautschuk und Thermoplaste umfassenden Gruppe ausgewählt ist.

6. Antriebsvorrichtung (38) nach Anspruch 1, bei der das Rollenschneckenglied (46) zur Axialbewegung ausgelegt und das Schienenglied (62) gegen Axialbewegung festgelegt ist.

7. Antriebsvorrichtung (38) nach Anspruch 1, bei der das Schienenglied (62) zur Axialbewegung ausgelegt und das Rollenschneckenglied (46) gegen Axialbewegung festgelegt ist.

8. Antriebsvorrichtung (38) nach Anspruch 1, bei der ein zweites Schienenglied neben der gegenüberliegenden Seite und axial auf die Hauptwelle (48) des Rollenschneckenglieds (46) ausgerichtet vorgesehen ist.

9. Antriebsvorrichtung (38) nach Anspruch 1, bei der zu jeder Zeit mindestens zwei Rollen (54) die Vorsprungoberseiten (66) gleichzeitig drehbar in Eingriff nehmen.

10. Antriebsvorrichtung (38) nach Anspruch 1, die weiterhin ein fest an das Rollenschneckenglied (46) angebrachtes Konstruktionsglied (36) umfaßt, das ein Mittel zur Drehung der Hauptwelle (48) enthält.

11. Antriebsvorrichtung (38) nach Anspruch 10, bei der das Mittel zur Drehung der Hauptwelle (48) ein Elektromotor ist, wobei das Konstruktionsglied (36) weiterhin ein Energiequellenmittel enthält, das mit einem Mittel zur Steuerung des Elektromotors verbunden ist, wodurch ein Benutzer (78) die Bewegung der Antriebsvorrichtung (38) steuerbar betätigt.

12. Antriebsvorrichtung (38) nach Anspruch 10, bei der das Mittel zur Drehung der Hauptwelle (48) ein an einem Ende (70) der Hauptwelle (48) angeordneter Hydraulikmotor (68) ist, wobei das Konstruktionsglied weiterhin ein Hydrauliksystem (72) enthält, das mit einem Mittel zur Steuerung (74) des Hydraulikmotors (68) verbunden ist, wodurch ein Benutzer (78) die Bewegung der Antriebsvorrichtung (38) steuerbar betätigt.

13. Antriebsvorrichtung (38) nach Anspruch 12, bei der das Hydrauliksystem (72) ein Mittel zur Druckbeaufschlagung (82) einer in einem Speicher (83) und mehreren Schlauchleitungen (88) angeordneten und zum Antrieb des Hydraulikmotors (68) verwendeten Hydraulikflüssigkeit, mehrere Ventilmittel (90) zur Steuerung der Strömungsrichtung der Hydraulikflüssigkeit in den Leitungen (88), mehrere Entlastungsventile (92) zur Steuerung des Stroms der Hydraulikflüssigkeit und ein Strömungsbegrenzungsmittel (94) zur sicheren Begrenzung des maximales Stroms der Hydraulikflüssigkeit umfaßt, wobei das Mittel (74) zur Steuerung des Hydraulikmotors (68) mit dem Ventilmittel (90) und dem Entlastungsventilmittel (92) verbunden ist und das Mittel zur Druckbeaufschlagung (82) von dem Konstruktionsglied (36) abnehmbar getragen wird.

14. Antriebsvorrichtung (38) nach Anspruch 13, die zum Antrieb eines beweglichen Glieds gegen mindestens eine konstante Zugkraft verwendet wird, wobei das Hydrauliksystem (72) weiterhin ein handbetätigtes Reserveventil (124) umfaßt, das das Entlastungsventilmittel (92) umgeht und von dem Benutzer (78) betätigt werden kann, um eine sichere und langsame Zirkulation der Hydraulikflüssigkeit im Hydraulikmotor (68) zu gestatten, wodurch das bewegliche Glied der Antriebsvorrichtung (38) von der konstanten Zugkraft zurückgezogen wird.

15. Antriebsvorrichtung (38) nach Anspruch 14, bei der der Hydraulikmotor (68) ein erster Hydraulikmotor ist und das Mittel zur Drehungweiterhin einen am anderen Ende (70a) der Hauptwelle (48) angeordneten zweiten Hydraulikmotor (68a) enthält, wobei der zweite Hydraulikmotor (68a) im Hydrauliksystem (72) parallel mit dem ersten (68) gekoppelt ist, um den in die Motoren (68, 68a) zirkulierenden Hydraulikflüssigkeitsstrom zu reduzieren, wodurch die Axialbewegung verlangsamt und die Belastungsfähigkeit der Antriebsvorrichtung (38) erhöht wird.

16. Antriebsvorrichtung (38) nach Anspruch 14, bei der das Mittel zur Druckbeaufschlagung (82) ein Verbrennungsmotor (86) ist, der eine Hydraulikpumpe (84) antreibt, und wobei die konstante Zugkraft die Schwerkraft ist.

17. Antriebsvorrichtung (38) nach Anspruch 16, bei der das bewegliche Glied weiterhin ein Sicherheitsbremsglied (108) zur mechanischen Verhinderung jeglicher drastischen Axialbewegung des beweglichen Glieds entlang dem nichtbeweglichen Glied aufweist, wobei das Bremsglied (108) einen automatischen Verriegelungsmechanismus (110), der das nichtbewegliche Glied in gleichmäßigen Abständen daran entlang in Eingriff nimmt, und einen Rastmechanismus (118), der es dem Benutzer (78) gestattet, den Verriegelungsmechanismus (110) vorzuspannen, wann immer dies erforderlich ist, umfaßt.

18. Kombination aus einem Plattformglied (36), einem Ständerglied (34) und einer Antriebsvorrichtung (38), durch die das Plattformglied (36) entlang dem Ständerglied (34) beweglich angebracht ist, wobei die Antriebsvorrichtung (38) folgendes umfaßt:
a) ein Rollenschneckenglied (46) mit einer Hauptwelle (48), mehreren radial aus der Hauptwelle (48) ragenden und in gleichen Abständen entlang einer Schraubenlinie (52) um die Hauptwelle (48) herum angeordneten Rollenwellen (50) und mehreren drehbar auf den Rollenwellen (50) angebrachten Rollen (54), wobei die Rollen (54) ein Lagermittel (56) zur Befestigung der Rollen (54) auf den Rollenwellen (50) enthalten, wobei die Rollen (54) zu einem Winkel (α) konisch zulaufen und derart auf den Rollenwellen (50) ausgerichtet sind, daß die Konizität einwärts zur Hauptwelle (48) verläuft; und
b) ein Schienenglied (62) neben der und axial ausgerichtet auf die Hauptwelle (48) des Rollenschneckenglieds (46), wobei das Schienenglied (62) mehrere gleichmäßig beabstandete Vorsprünge (64) mit geneigten Oberseiten (66), die zum radialen Eingriff mit der Unterseite (58) der konisch zulaufenden Flächen (60) der Rollen (54) ausgeführt sind, aufweist, wobei die Neigung der Vorsprungoberseiten (66) gleich der der Schraubenlinie (52) der Rollenwellen (54) des Rollenschneckenglieds (46) ist, wobei das Schienenglied (62) am Ständerglied (34) abnehmbar befestigt ist; und
c) ein Konstruktionsglied (36), das am Rollenschneckenglied (46) fest angebracht ist und das Plattformglied (32) stützt, wobei das Konstruktionsglied (36) das Ständerglied (34) zumindest teilweise umgibt und ein Mittel zur Drehung der Hauptwetle (48) enthält;
d) wobei das Rollenschneckenglied (46) oder das Schienenglied (62) zur Axialbewegung ausgelegt und das jeweils andere Glied, das heißt das Schienenglied (62) oder das Rollenschneckenglied (46), gegen Axialbewegung festgelegt, wobei die Drehung der Hauptwelle (48) das Rollenschneckenglied (46) mit dem Plattformglied (32) in Axiairichtung der Hauptwelle (48) entlang dem Ständerglied (34) in Bewegung versetzt, wobei die konisch zulaufenden Rollenunterseiten (58) die Vorsprungoberseiten (66) drehbar in Eingriff nehmen und der Winkel (α ) der Konizität bestimmt wird, um bei Bewegung einen gleitfreien Eingriff zwischen den Rollenflächen (60) und den Vorsprungoberseiten (66) bereitzustellen.

19. Kombination nach Anspruch 18, bei der die Rollenwellen (50) im Winkel (α) von der Radialrichtung von der Hauptwelle (48) radial nach außen und oben ragen, wodurch die Unterseite (58) der konisch zulaufenden Fläche (60) jeder Rolle (54) allgemein senkrecht zur Achse der Hauptwelle (48) ausgerichtet wird.

20. Kombination nach Anspruch 18, bei der die Vorsprünge (64) des Schienenglieds (62) weiterhin geneigte Unterseiten (66a) aufweisen, die zum radialen Eingriff mit der Oberseite (58a) der konisch zulaufenden Flächen (60) der Rollen (54) ausgeführt sind, wobei die Neigung der Vorsprungunterseiten (66a) gleich der der Schraubenlinie (52) der Rollenwellen (50) des Rollenschneckenglieds (46) ist, wobei die entgegengesetzte Drehung der Hauptwelle (48) das bewegliche Glied in die entgegengesetzte Axialrichtung der Hauptwelle (48) in Bewegung versetzt, wobei die konisch zulaufenden Rollenoberseiten (58a) die Vorsprungunterseiten (66a) drehbar in Eingriff nehmen, wobei der Winkel ( α) der Konizität bei entgegengesetzter Bewegung auch einen gleitfreien Eingriff zwischen den Rollenflächen (60) und den Vorsprungunterseiten (66a) bereitstellt, wobei der Abstand zwischen einer Vorsprungoberseite (66) und der gegenüberliegenden Unterseite (66a) des benachbarten Vorsprungs (64) zur im wesentlichen freien Aufnahme der Rollen (54) ausgeführt ist, wodurch ein fließender Übergang zwischen den Bewegungen des beweglichen Glieds entlang der Axialrichtung und der entgegengesetzten Axialrichtung der Hauptwelle (48) gewährleistet wird.

21. Kombination nach Anspruch 18, bei der das Rollenschneckenglied (46) zur Axialbewegung ausgeführt ist und das Schienenglied (62) am Ständerglied (34) gegen Axialbewegung festgelegt ist.

22. Kombination nach Anspruch 18, bei der das Konstruktionsglied (36) relativ lang ist, um die Formsteifigkeit des Ständerglieds (24) insbesondere gegen Knickung bedeutend zu verbessern, wobei das Konstruktionsglied (36) mehrere Paare Laufrollen (40) aufweist, die drehbar daran angebracht sind, wobei die Laufrollen (40) am Ständerglied (34) anliegen und das Konstruktionsglied (32) daran entlangführen.

23. Kombination nach Anspruch 18, bei der das Mittel zur Drehung der Hauptwelle (48) ein an einem Ende (70) der Hauptwelle (48) angeordneter Hydraulikmotor (68) ist, wobei das Konstruktionsglied (36) weiterhin ein Hydrauliksystem (72) enthält, das mit einem Mittel (74) zur Steuerung des Hydraulikmotors (68) verbunden ist, wodurch ein Benutzer (78) die Bewegung der Antriebsvorrichtung (38) steuerbar betätigt.

24. Kombination nach Anspruch 23, bei der das Hydrauliksystem (72) ein Mittel zur Druckbeaufschlagung (82) einer in einem Speicher (83) und mehreren Schlauchleitungen (88) angeordneten und zum Antrieb des Hydraulikmotors (68) verwendeten Hydraulikflüssigkeit, mehrere Ventilmittel (90) zur Steuerung der Strömungsrichtung der Hydraulikflüssigkeit in den Leitungen (88), mehrere Entlastungsventile (92) zur Steuerung des Stroms der Hydraulikflüssigkeit und ein Strömungsbegrenzungsmittel (94) zur sicheren Begrenzung des maximales Stroms der Hydraulikflüssigkeit umfaßt, wobei das Mittel (74) zur Steuerung des Hydraulikmotors (68) mit dem Ventilmittel (90) und dem Entlastungsventilmittel (92) verbunden ist und das Mittel (82) zur Druckbeaufschlagung von dem Konstruktionsglied (36) abnehmbar getragen wird.

25. Kombination nach Anspruch 24, bei der die Antriebsvorrichtung (38) zum Antrieb des beweglichen Glieds gegen mindestens eine konstante Zugkraft verwendet wird, wobei das Hydrauliksystem (72) weiterhin ein handbetätigtes Reserveventil (124) umfaßt, das das Entlastungsventilmittel (92) umgeht und von dem Benutzer (78) betätigt werden kann, um eine sichere und langsame Zirkulation der Hydraulikflüssigkeit im Hydraulikmotor (68) zu gestatten, wodurch das bewegliche Glied der Antriebsvorrichtung (38) von der konstanten Zugkraft zurückgezogen wird.

26. Kombination nach Anspruch 25, bei der der Hydraulikmotor (68) ein erster Hydraulikmotor ist und das Mittel zur Drehungweiterhin einen am anderen Ende (70a) der Hauptwelle (48) angeordneten zweiten Hydraulikmotor (68a) enthält, wobei der zweite Hydraulikmotor (68a) im Hydrauliksystem (72) parallel mit dem ersten (68) gekoppelt ist, um den in die Motoren (68, 68a) zirkulierenden Hydraulikflüssigkeitsstrom zu reduzieren, wodurch die Axialbewegung verlangsamt und die Belastungsfähigkeit der Antriebsvorrichtung (38) erhöht wird.

27. Kombination nach Anspruch 26, bei der das Plattformglied (32) eine Arbeitsplattform ist, wobei das Ständerglied (34) und das Konstruktionsglied (36) einen allgemein quadratischen Querschnitt aufweisen, wobei das Mittel (82) zur Druckbeaufschlagung ein Verbrennungsmotor (86) ist, der eine Hydraulikpumpe (84) antreibt, und die konstante Zugkraft die Schwerkraft ist.

28. Kombination nach Anspruch 26, bei der das Plattformglied (32) eine Aufzugskabine und die konstante Zugkraft die Schwerkraft ist.

29. Kombination nach Anspruch 23, bei der das Konstruktionsglied (36) mehrere Paare Laufrollen (40) aufweist, die daran angebracht sind, wobei die Laufrollen (40) am Ständerglied (34) anliegen und das Konstruktionsglied (36) daran entlangführen.

30. Kombination nach Anspruch 29, bei der das Konstruktionsglied (36) weiterhin ein Sicherheitsbremsglied (108) zur mechanischen Verhinderung jeglicher drastischen Axialbewegung des beweglichen Glieds entlang dem nichtbeweglichen Glied ausweist, wobei das Bremsglied (108) einen automatischen Verriegelungsmechanismus (110), der das nichtbewegliche Glied in gleichmäßigen Abständen daran entlang in Eingriff nimmt, und einen Rastmechanismus (118), der es dem Benutzer (78) gestattet, den Verriegelungsmechanismus (110) vorzuspannen, wann immer dies erforderlich ist, umfaßt.

31. Kombination nach Anspruch 23, bei der das Ständerglied (34) und die Antriebsvorrichtung (38) ein erstes Ständerglied (34) bzw. eine erste Antriebsvorrichtung (38) sind, wobei die Kombination weiterhin mindestens ein von dem ersten Ständerglied beabstandetes zweites Ständerglied und eine das Plattformglied (32) entlang dem zweiten Ständerglied beweglich befestigende zweite Antriebsvorrichtung enthält, wobei jedes Konstruktionsglied (36) ein sich zwischen den beiden Ständergliedern befindendes Ende des Plattformglieds (32) stützt.

32. Kombination nach Anspruch 31, die mindestens zwei Plattformglieder (32), mindestens drei Ständerglieder (34) und mindestens drei Antriebsvorrichtungen (38) umfaßt, wobei sich die Plattformglieder (32) ein gleiches, zwischen ihnen angeordnetes Ständerglied (34) miteinander teilen.

## Revendications

1. Appareil d'entraînement (38) comprenant :
a) un organe à vis à rouleaux (46) incluant un arbre principal (48), une pluralité d'arbres à rouleaux (50) faisant saillie radialement extérieurement à partir de l'arbre principal (48) et agencés à des intervalles équidistants le long d'une ligne hélicoïdale (52) autour de l'arbre principal (48) et une pluralité de rouleaux (54) montés de façon rotative sur les arbres à rouleaux (50), les rouleaux (54) incluant des moyens de palier (56) pour monter les rouleaux (54) sur les arbres à rouleaux (50), les rouleaux (54) étant coniques d'un angle (α), les rouleaux (54) étant orientés sur les arbres à rouleaux (50) avec la conicité intérieurement à l'arbre principal (48) ; et
b) un organe de rail (62) adjacent et axialement orienté avec l'arbre principal (48) de l'organe à vis à rouleaux (46), l'organe de rail (62) incluant une pluralité de saillies équidistantes (64) ayant des surfaces supérieures inclinées (66) adaptées pour un engagement radial avec le fond (58) des surfaces coniques (60) des rouleaux (54), l'inclinaison des surfaces supérieures en saillie (66) étant égale à celle de la ligne hélicoïdale (52) des arbres à rouleaux (54) de l'organe à vis à rouleaux (46);
c) un de l'organe à vis à rouleaux (46) et de l'organe de rail (62) étant adapté pour un déplacement axial et l'autre de l'organe à vis à rouleaux (46) et de l'organe de rail (62) étant fixé contre un déplacement axial, la rotation de l'arbre principal (48) permettant à l'organe déplaçable de se déplacer dans la direction axiale de l'arbre principal (48) avec les surfaces de fond des rouleaux coniques (58) engageant de façon rotative les surfaces supérieures en saillie (66), l'angle (α) de la conicité étant déterminé pour fournir un engagement coulissant libre entre les surfaces de rouleaux (60) et les surfaces supérieures en saillie (66) pendant le déplacement.

2. Appareil d'entraînement (38) comme défini dans la revendication 1, dans lequel les arbres à rouleaux (50) font saillie radialement extérieurement et vers le haut sous l'angle (α) à partir de la direction radiale à partir de l'arbre principal (48) permettant ainsi à chaque rouleau (54) avec le fond (58) de sa surface conique (60) d'être généralement orienté perpendiculairement à l'axe de l'arbre principal (48).

3. Appareil d'entraînement (38) comme défini dans la revendication 1, dans lequel les saillies (64) de l'organe de rail (62) présentent de plus des surfaces inférieures inclinées (66a) adaptées pour un engagement radial avec le dessus (58a) des surfaces coniques (60) des rouleaux (54), l'inclinaison des surfaces inférieures en saillie (66a) étant égale à celle de la ligne hélicoïdale (52) des arbres à rouleaux (50) de l'organe à vis à rouleaux (46), la rotation opposée de l'arbre principal (48) permettant à l'organe mobile de se déplacer dans la direction axiale opposée de l'arbre principal avec les surfaces supérieures des rouleaux coniques (58a) engageant de façon rotative les surfaces inférieures en saillie (66a), l'angle (α) de la conicité permettant également un engagement coulissant libre entre les surfaces de rouleaux (60) et les surfaces inférieures en saillie (66a) pendant le déplacement opposé, l'espacement entre une surface supérieure en saillie (66) et la surface inférieure en vis-à-vis (66a) de la saillie adjacente (64) étant adapté pour recevoir de façon essentiellement libre les rouleaux (54) en fournissant ainsi une transition douce entre les déplacements de l'organe mobile le long de la direction axiale et de la direction axiale opposée de l'arbre principal (48).

4. Appareil d'entraînement (38) comme défini dans la revendication 1, dans lequel les moyens de palier (56) comprennent des paliers à rouleaux.

5. Appareil d'entraînement (38) comme défini dans la revendication 1, dans lequel les surfaces coniques des rouleaux (60) sont réalisées en une matière choisie à partir du groupe constitué d'un métal, de caoutchouc et de matières thermoplastiques.

6. Appareil d'entraînement (38) comme défini dans la revendication 1, dans lequel l'organe à vis à rouleaux (46) est adapté pour un déplacement axial et l'organe de rail (62) est fixé contre un déplacement axial.

7. Appareil d'entraînement (38) comme défini dans la revendication 1, dans lequel l'organe de rail (62) est adapté pour un déplacement axial et l'organe à vis à rouleaux (46) est fixé contre un déplacement axial.

8. Appareil d'entraînement (38) comme défini dans la revendication 1, dans lequel un second organe de rail est adjacent au côté opposé et axialement orienté avec l'arbre principal (48) de l'organe à vis à rouleaux (46).

9. Appareil d'entraînement (38) comme défini dans la revendication 1, dans lequel au moins deux rouleaux (54) engagent simultanément de façon rotative les surfaces supérieures en saillie (66) à tout instant.

10. Appareil d'entraînement (38) comme défini dans la revendication 1, comprenant de plus un organe de structure (36) fixé rigidement à l'organe à vis à rouleaux (46), l'organe de structure (36) incluant des moyens pour faire tourner l'arbre principal (48).

11. Appareil d'entraînement (38) comme défini dans la revendication 10, dans lequel les moyens pour faire tourner l'arbre principal (48) sont un moteur électrique, l'organe de structure (36) comprenant de plus des moyens de source de puissance reliés à celui-ci et des moyens pour commander le moteur électrique, grâce à quoi un utilisateur (78) peut contrôler le déplacement de l'appareil d'entraînement (38).

12. Appareil d'entraînement (38) comme défini dans la revendication 10, dans lequel les moyens pour faire tourner l'arbre principal (48) sont un moteur hydraulique (68) situé à une extrémité (70) de l'arbre principal (48), l'organe de structure incluant de plus un système hydraulique (72) lié à celui-ci et des moyens pour commander (74) le moteur hydraulique (68), grâce à quoi un utilisateur (78) peut commander le déplacement de l'appareil entraînement (38).

13. Appareil d'entraînement (38) comme défini dans la revendication 12, dans lequel le système hydraulique (72) comprend des moyens pour mettre sous pression (82) un liquide hydraulique situé dans un réservoir (83) et une pluralité de tuyaux (88) et utilisés pour entraîner le moteur hydraulique (68), une pluralité de moyens de valve (90) pour commander la direction du flux de liquide hydraulique dans les tuyaux (88), une pluralité de moyens de valve de décharge (92) pour commander le flux de liquide hydraulique, des moyens de limitation de flux (94) pour limiter de façon sûre le flux maximum du liquide hydraulique, les moyens pour commander (74) le moteur hydraulique (68) étant liés aux moyens de valve (90) et aux moyens de valve de décharge (92), les moyens de mise sous pression (82) étant portés de façon amovible par l'organe de structure (36).

14. Appareil d'entraînement (38) comme défini dans la revendication 13, dans lequel l'appareil d'entraînement (38) est utilisé pour entraîner l'organe mobile contre au moins une force de traction constante, le système hydraulique (72) comprend de plus une valve de secours manuelle (124) contournant les moyens de valve de décharge (92) et pouvant être actionnée par l'utilisateur (78) pour permettre, de façon sûre et lente, au liquide hydraulique de circuler dans le moteur hydraulique (68), l'organe mobile de l'appareil d'entraînement (38) étant ainsi rappelé par la force de traction constante.

15. Appareil d'entraînement (38) comme défini dans la revendication 14, dans lequel le moteur hydraulique (68) est un premier moteur hydraulique, les moyens de rotation incluent de plus un second moteur hydraulique (68a) situé à l'autre extrémité (70a) de l'arbre principal (48), le second moteur hydraulique (68a) étant relié en parallèle avec le premier moteur (68) dans le système hydraulique (72) pour réduire le flux du liquide hydraulique circulant dans les moteurs (68, 68a), en ralentissant ainsi le déplacement axial et en augmentant la capacité de charge de l'appareil d'entraînement (38).

16. Appareil d'entraînement (38) comme défini dans la revendication 14, dans lequel les moyens de mise sous pression (82) sont un moteur à combustion interne (86) entraînant une pompe hydraulique (84) et la force de traction constante est la force de gravité.

17. Appareil d'entraînement (38) comme défini dans la revendication 16, dans lequel l'organe mobile présente de plus un organe de freinage de sécurité (108) pour empêcher mécaniquement tout déplacement axial relativement brusque de l'organe mobile le long de l'organe non mobile, l'organe de freinage (108) comprenant un mécanisme de verrouillage automatique (110) qui engage l'organe non mobile à des intervalles réguliers le long de celui-ci et un mécanisme de blocage (118) permettant à l'utilisateur (78) de solliciter le mécanisme de verrouillage (110) quand cela est requis.

18. Combinaison d'un organe de plate-forme (36), d'un organe de montant (34), et d'un appareil d'entraînement (38) permettant de monter de façon déplaçable l'organe de plate-forme (36) le long de l'organe de montant (34), l'appareil d'entraînement (38) comprenant :
a) un organe à vis à rouleaux (46) incluant un arbre principal (48), une pluralité d'arbres à rouleaux (50) faisant saillie radialement extérieurement à partir de l'arbre principal (48) et agencés à des intervalles équidistants le long d'une ligne hélicoïdale (52) autour de l'arbre principal (48) et une pluralité de rouleaux (54) montés de façon rotative sur les arbres à rouleaux (50), les rouleaux (54) incluant des moyens de palier (56) pour monter les rouleaux (54) sur les arbres à rouleaux (50), les rouleaux (54) étant coniques d'un angle (α), les rouleaux (54) étant orientés sur les arbres à rouleaux (50) avec la conicité intérieurement à l'arbre principal (48) ; et
b) un organe de rail (62) adjacent et axialement orienté avec l'arbre principal (48) de l'organe à vis à rouleaux (46), l'organe de rail (62) incluant une pluralité de saillies équidistantes (64) ayant des surfaces supérieures inclinées (66) adaptées pour un engagement radial avec le fond (58) des surfaces coniques (60) des rouleaux (54), l'inclinaison des surfaces supérieures en saillie (66) étant égale à celle de la ligne hélicoïdale (52) des arbres à rouleaux (54) de l'organe à vis à rouleaux (46), l'organe de rail (62) étant fixé de façon amovible à l'organe de montant (34) ; et
c) un organe de structure (36) fixé rigidement à l'organe à vis à rouleaux (46) et supportant l'organe de plate-forme (32), l'organe de structure (36) entourant au moins partiellement l'organe de montant (34) et incluant des moyens pour faire tourner l'arbre principal (48) ;
d) un de l'organe à vis à rouleaux (46) et de l'organe de rail (62) étant adapté pour un déplacement axial et l'autre de l'organe à vis à rouleaux (46) et de l'organe de rail (62) étant fixé contre un déplacement axial, la rotation de l'arbre principal (48) permettant à l'organe déplaçable de se déplacer dans la direction axiale de l'arbre principal (48) avec les surfaces de fond des rouleaux coniques (58) engageant de façon rotative les surfaces supérieures en saillie (66), l'angle (α) de la conicité étant déterminé pour fournir un engagement coulissant libre entre les surfaces de rouleaux (60) et les surfaces supérieures en saillie (66) pendant le déplacement.

19. Combinaison comme définie dans la revendication 18, dans laquelle les arbres à rouleaux (50) font saillie radialement extérieurement et vers le haut sous l'angle (α) à partir de la direction radiale à partir de l'arbre principal (48) permettant ainsi à chaque rouleau (54) avec le fond (58) de sa surface conique (60) d'être généralement orienté perpendiculairement à l'axe de l'arbre principal (48).

20. Combinaison comme définie dans la revendication 18, dans laquelle les saillies (64) de l'organe de rail (62) présentent de plus des surfaces inférieures inclinées (66a) adaptées pour un engagement radial avec le dessus (58a) des surfaces coniques (60) des rouleaux (54), l'inclinaison des surfaces inférieures en saillie (66a) étant égale à celle de la ligne hélicoïdale (52) des arbres à rouleaux (50) de l'organe à vis à rouleaux (46), la rotation opposée de l'arbre principal (48) permettant à l'organe mobile de se déplacer dans la direction axiale opposée de l'arbre principal (48) avec les surfaces supérieures des rouleaux coniques (58a) engageant de façon rotative les surfaces inférieures en saillie (66a), l'angle (α) de la conicité permettant également un engagement coulissant libre entre les surfaces de rouleaux (60) et les surfaces inférieures en saillie (66a) pendant le déplacement opposé, l'espacement entre une surface supérieure en saillie (66) et la surface inférieure en vis-à-vis (66a) de la saillie adjacente (64) étant adapté pour recevoir de façon essentiellement libre les rouleaux (54) en fournissant ainsi une transition douce entre les déplacements de l'organe mobile le long de la direction axiale et de la direction axiale opposée de l'arbre principal (48).

21. Combinaison comme définie dans la revendication 18, dans laquelle l'organe à vis à rouleaux (46) est adapté pour un déplacement axial et l'organe de rail (62) sur l'organe de montant (34) est fixé contre un déplacement axial.

22. Combinaison comme définie dans la revendication 18, dans laquelle l'organe de structure (36) est relativement long pour augmenter de façon significative la rigidité structurelle de l'organe de montant (34) en particulier contre un gauchissement, l'organe de structure (36) présentant une pluralité de paires de roues libres (40) montées de façon rotative sur celui-ci, les roues libres (40) reposant sur l'organe de montant (34) et guidant l'organe de structure (36) le long de celui-ci.

23. Combinaison comme définie dans la revendication 18, dans laquelle les moyens pour faire tourner l'arbre principal (48) sont un moteur hydraulique (68) situé à une extrémité (70) de l'arbre principal (48), l'organe de structure (36) incluant de plus un système hydraulique (72) lié à celui-ci et des moyens pour commander (74) le moteur hydraulique (68), grâce à quoi un utilisateur (78) peut commander le déplacement de l'appareil d'entraînement (38).

24. Combinaison comme définie dans la revendication 23, dans laquelle le système hydraulique (72) comprend des moyens pour mettre sous pression (82) un liquide hydraulique situé dans un réservoir (83) et une pluralité de tuyaux (88) et utilisés pour entraîner le moteur hydraulique (68), une pluralité de moyens de valve (90) pour commander la direction du flux de liquide hydraulique dans les tuyaux (88), une pluralité de moyens de valve de décharge (92) pour commander le flux de liquide hydraulique, des moyens de limitation de flux (94) pour limiter de façon sûre le flux maximum du liquide hydraulique, les moyens pour commander (74) le moteur hydraulique (68) étant liés aux moyens de valve (90) et aux moyens de valve de décharge (92), les moyens de mise sous pression (82) étant portés de façon amovible par l'organe de structure (36).

25. Combinaison comme définie dans la revendication 24, dans laquelle l'appareil d'entraînement (38) est utilisé pour entraîner l'organe mobile contre au moins une force de traction constante, le système hydraulique (72) comprend de plus une valve de secours manuelle (124) contournant les moyens de valve de décharge (92) et pouvant être actionnée par l'utilisateur (78) pour permettre, de façon sûre et lente, au liquide hydraulique de circuler dans le moteur hydraulique (68), l'organe mobile de l'appareil d'entraînement (38) étant ainsi rappelé par la force de traction constante.

26. Combinaison comme définie dans la revendication 25, dans laquelle le moteur hydraulique (68) est un premier moteur hydraulique, les moyens de rotation incluent de plus un second moteur hydraulique (68a) situé à l'autre extrémité (70a) de l'arbre principal (48), le second moteur hydraulique (68a) étant relié en parallèle avec le premier moteur (68) dans le système hydraulique (72) pour réduire le flux du liquide hydraulique circulant dans les moteurs (68, 68a), en ralentissant ainsi le déplacement axial et en augmentant la capacité de charge de l'appareil d'entraînement (38).

27. Combinaison comme définie dans la revendication 26, dans laquelle l'organe de plate-forme (32) est une plate-forme de travail, l'organe de montant (34) et l'organe de structure (36) présentent une section transversale généralement carrée, les moyens de mise sous pression (82) sont un moteur à combustion interne (86) entraînant une pompe hydraulique (84) et la force de traction constante est la force de gravité.

28. Combinaison comme définie dans la revendication 26, dans laquelle l'organe de plate-forme (32) est une cage de monte-charge et la force de traction constante est la force de gravité.

29. Combinaison comme définie dans la revendication 23, dans laquelle l'organe de structure (36) présente une pluralité de paires de roues libres (40) montées de façon rotative sur celui-ci, les roues libres (40) reposant sur l'organe de montant (34) et guidant l'organe de structure (36) le long de celui-ci.

30. Combinaison comme définie dans la revendication 29, dans laquelle l'organe de structure (36) présente de plus un organe de freinage de sécurité (108) pour empêcher mécaniquement tout mouvement axial relativement brusque de l'organe mobile le long de l'organe non mobile, l'organe de freinage (108) comprenant un mécanisme de verrouillage automatique (110) qui engage l'organe de montant (34) à des intervalles réguliers le long de celui-ci et un mécanisme de blocage (118) permettant à l'utilisateur (78) de solliciter le mécanisme de verrouillage (110) quand cela est requis.

31. Combinaison de la revendication 23, dans laquelle l'organe de montant (34) et l'appareil d'entraînement (38) sont un premier organe de montant (34) et un premier appareil d'entraînement (38) respectivement, la combinaison comportant de plus au moins un second organe de montant espacé du premier organe de montant, un second appareil d'entraînement permettant de déplacer l'organe de plate-forme (32) le long du second organe de montant, chaque organe de structure (36) supportant une extrémité de l'organe de plate-forme (32) situé entre les deux organes de montant.

32. Combinaison de la revendication 31 comprenant au moins deux organes de plate-forme (32), au moins trois organes de montant (34), et au moins trois appareils d'entraînement (38), chacun des organes de plate-forme (32) partageant un même organe de montant (34) positionné entre les deux.
